# EUROPÄISCHE PATENTANMELDUNG

(11) **EP 3 351 791 A1**
(43) Veröffentlichungstag der Anmeldung: **25.07.2018**
(21) Anmeldenummer: 17152682.5
(22) Anmeldetag: 23.01.2017
(51) Int. Cl.: F03D 15/20, H02K 7/18, H02K 9/00, F03D 9/25, F03D 80/60, H02K 5/20

(54) **STATORTRÄGER EINES GETRIEBELOSEN WINDGENERATORS**

(71) Anmelder: Siemens Aktiengesellschaft, 80333 München (DE)
(72) Erfinder: Jöckel, Andreas, 90408 Nürnberg (DE); Winkler, Günther, 4785 Haibach (AT)

(57) **Zusammenfassung**

Die Erfindung betrifft einen Statorträger (27) eines Stators (2) einer direkt angetriebenen Windgenerators (1) mit Außenläufer, welcher Statorträger (27) sich über ein Befestigungselement auf einer Lagereinheit (13) abstützt, wobei das Befestigungselement einen mit der Lagereinheit (13) verbindbaren Mittenflansch (8) aufweist, und sich in seinem radialen Verlauf nach außen axial in Richtung der Stirnseiten des Stators (2) erweitert, um radial unterhalb des Stators (2) einen Hohlraum (11) zu schaffen.

## Beschreibung

Die Erfindung betrifft einen Statorträger, einen Stator, eine Lagereinheit zur Fixierung eines Stators einer Windkraftanlage und ein Kühlverfahren zur Kühlung des Stators.

Windkraftanlagen weisen dynamoelektrische Maschinen, insbesondere Generatoren auf, die über Getriebe oder direkt über die Nabe des Windkraftrotors angetrieben werden. Bei direkt angetriebenen Windkraftgeneratoren können diese, aufgrund der dementsprechenden Durchmesser, in Umfangsrichtung betrachtet, segmentiert ausgeführt. Um dabei eine ausreichende Kühlung und Festigkeit der Statoreinheit zu gewährleisten, sind verschiedene Konstruktionen bekannt.

So ist aus der DE 44 02 184 C2 ein Vielpol-Synchrongenerator für getriebelose Horizontalachsen-Windkraftanlagen bekannt, die einen Außenläufer aufweisen.

Ebenso ist aus der DE 10 2004 028 746 A1 ein Turmkopf einer Windenergieanlage bekannt, dessen Generator einen Außenläufer aufweist.

Nachteilig dabei sind u.a. die konstruktiv aufwändigen Lösungen, die auch eine Kühlung des Stators des Außenläufergenerators erschweren.

Ausgehend davon liegt der Erfindung die Aufgabe zugrunde, einen Statorträger zu schaffen, der sowohl eine ausreichende Festigkeit des Stators gewährleistet, als auch eine ausreichende Kühlung des Stators gewährleistet. Des Weiteren soll durch die Erfindung eine dementsprechende Lagereinheit, als auch eine dementsprechend ausgeführte Windkraftanlage und ebenso ein effizientes Kühlverfahren zur Kühlung des Stators des Windkraftgenerators geschaffen werden.

Die Lösung der gestellten Aufgabe gelingt durch einen Statorträger eines Stators einer direkt angetriebenen Windgenerators mit Außenläufer, welcher Statorträger sich über ein Befestigungselement auf einer Lagereinheit abstützt, dadurch gekennzeichnet, dass das Befestigungselement einen mit der Lagereinheit verbindbaren Mittenflansch aufweist, und sich in seinem radialen Verlauf nach außen axial in Richtung der Stirnseiten des Statorträgers erweitert, um radial innerhalb des Stators einen Hohlraum zu schaffen.

Die Lösung der gestellten Aufgabe gelingt ebenfalls durch einen Stator mit einem derartigen Statorträger, wobei ein Blechpaket des Stators axial voneinander beabstandete Teilblechpakte aufweist.

Die Lösung der gestellten Aufgabe gelingt ebenfalls durch eine Lagereinheit zur Fixierung eines Stators, die sich zumindest über ein Lager auf einer Nabe abstützt und mit einem Maschinenhausrahmen einer Windkraftanlage verbunden ist, wobei die Lagereinheit einen Mittenflansch aufweist, der sich in radialer Richtung erstreckt.

Die Lösung der gestellten Aufgabe gelingt ebenfalls durch eine Windkraftanlage mit einer Lagereinheit.

Die Lösung der gestellten Aufgabe gelingt ebenso durch eine Kühlverfahren eines Windkraftgenerators, wobei über zumindest eine Zuluftöffnung, Luft den beiden Wickelköpfen auf der Stirnseite des Stators zugeführt und über den Luftspalt des Windgenerators, den Kühlschlitzen zwischen den Teilblechpaketen des Stators und dem Hohlraum radial innerhalb des Stators über zumindest eine Abluftöffnung abgesaugt wird.

Erfindungsgemäß weist der Statorträger nunmehr einen einzelnen vergleichsweise zentralen Flansch auf einer Lagereinheit, den Mittenflansch auf. An diesem Mittenflansch sind weitere mechanische Komponenten vorgesehen, die sich in radialer Richtung auf die axialen Stirnseiten eines Stators erweitern.

Dabei bildet sich, erfindungsgemäß im Längsschnitt betrachtet, eine U- oder insbesondere Y-förmige Anordnung des Statorträgers aus.

Unter Berücksichtigung der Lagereinheit kann dieser Längsschnitt auch als kelchförmig betrachtet werden. Ein auf dem Statorträger positionierter Stator bildet dabei den radialen Abschluss

Räumlich betrachtet bildet der Mittenflansch eine scheibenförmige Einheit aus, an deren radial ausliegendem Bereich ein- oder mehrstückige Komponenten eine rinnenförmige Struktur ausbilden, die dann zusammen mit dem auf der rinnenförmigen Struktur angeordneten Stator einen Hohlraum bilden.

Der Statorträger weist somit bezüglich seines konstruktiven Erscheinungsbildes Ähnlichkeiten mit einer Umlenkrolle eines Seiles auf.

Der Mittenflansch trägt einen Felgenboden, wobei der Mittenflansch mittels Schweißen oder Schrauben an diesem Felgenboden fixiert ist. Die gesamte, sogenannte Felge wird aus zwei gegenüberliegenden Flanschringen und dem Felgenboden gebildet und schafft somit den Hohlraum radial innerhalb des Stators. Die beidseitigen Flanschringe der Felge dienen auch zur radialen und zur axialen Anbindung der einzelnen Statorsegmente an den Mittenflansch und damit an die Lagereinheit. Die Flanschringe sind im Bereich der Stirnseiten des Stators bzw. der Statorsegmente mit diesen fixiert.

Nach Fixierung aller Statorsegmente an ihren jeweiligen Flanschringen ergibt sich zwischen Felge und den Statorsegmenten ein in Umfangsrichtung betrachtet umlaufender Hohlraum, der auch als Felgenhohlraum bezeichnet wird. Dieser Felgenhohlraum befindet sich radial innerhalb des Stators.

Die rinnenförmige Struktur, die den Hohlraum zumindest an einer Seite mitgestaltet, ist je nach Gestaltung, vor allem des Felgenbodens symmetrisch oder asymmetrisch bzgl. des Mittenflansches ausgeführt.

Mittels dieser gebildeten Anordnung kann nunmehr Kühlluft z.B. die Innenluft der Gondel, zur Kühlung durch die teilpaketierte Stator oder Statorsegmente in den Felgenhohlraum eingesaugt werden. Die Zuluft wird dabei über die Wickelköpfe, die sich an den Stirnseiten des Stators oder der jeweiligen Statorsegmente befinden, in den Luftspalt des Windkraftgenerators eingesaugt. Von dort strömt diese Luft über die zwischen den Teilpaketen des Stators oder der Statorsegmente vorhandenen Abstände bzw. Kühlschlitze radial nach innen in den Felgenhohlraum. Von dort wird die erwärmte Luft auf der Abluftseite wieder abgegeben.

Vorteilhafterweise ist sowohl die Zufuhr der Kühlluft, als auch die Abgabe der erwärmten Kühlluft auf der gleichen Seite der Generatoreinheit vorgesehen, was zu einem kompakteren Aufbau der Gondel führt.

Diese durch den Windkraftgenerator also durch Stator und Rotor erwärmte Luft wird mittels Gebläse durch Bildung eines Unterdrucks im Abluftteil und damit des Hohlraumes abgesaugt und beispielsweise an die Außenluft abgegeben.

Entsprechende axiale Öffnungen bzw. Ausnehmungen im Mittenflansch gewährleisten eine ausreichende und gleichzeitige und gleichmäßige Kühlluftzufuhr an beiden Seiten der Wickelköpfe. Dies führt zu einer ausgeglichenen, insbesondere gleichmäßigen axialen Temperaturverteilung entlang des Stators und des Windkraftgenerators. Um auch innerhalb des Hohlraums eine ausreichende Vergleichmäßigung des Druckes zu erhalten, sind zwischen Teilvolumina des Hohlraumes, Luftaustauschöffnungen vorgesehen.

Durch die einflanschige Anbindung der Felge über den Mittenflansch an die Lagereinheit ist eine Minimierung der mechanischen Schnittstellen gegeben, d.h. es ergibt sich eine Kosteneinsparung durch geringeren Bearbeitungsaufwand und eine höhere Passgenauigkeit der einzelnen Statorsegmente. Durch die höhere Passgenauigkeit kann auch der Luftspalt des Windkraftgenerators wesentlich genauer eingestellt werden, was den Wirkungsgrad des Generators steigert.

Des Weiteren ergibt sich durch Öffnungen im Mittenflansch eine vergleichsweise einfache einseitige Luftzuführung, die auch den Wickelkopfbereich erreicht, der dem Rotorblatt zugewandt ist. Somit ist gewährleistet, dass beide Wickelköpfe, der Luftspalt des Generators, das Wicklungssystem und auch das Blechpaket des Stators bzw. der Statorsegmente eine ausreichende Kühlung erfahren. Es ist somit eine symmetrische Kühlleistung über die axiale Länge des Blechpakets des Stators bzw. der Statorsegmente, insbesondere bezogen auf die Blechpaketmitte gegeben.

Durch die Hohlraumgestaltung zwischen Statorsegmenten und der Felge, also des Felgenhohlraumes können nunmehr die Absaugrohre vergleichsweise gut integriert werden. Demzufolge kann die gesamte Windkraftanlage sehr kompakt ausgeführt werden, was eine Platzersparnis innerhalb der Gondel und somit auch gegebenenfalls eine Verkleinerung der Gondel bewirkt.

Der Hohlraum radial innerhalb des Stators wird demnach durch den Felgenboden, aus zwei gegenüberliegenden Flanschringen, und der dem Luftspalt des Generators abgewandten Seite des Stators gebildet. Der Stator kann dabei in Umfangrichtung einteilig oder segmentartig aus separaten Statorsegmenten aufgebaut sein. Der Mittenflansch trägt diese den Hohlraum bildenden Komponenten. Der Mittenflansch kann dabei einteilig oder mehrteilig ausgebildet sein. Er ist in einer Ausführung nahezu scheibenförmig an der Lagereinheit angeordnet. Er ist dabei axial betrachtet vorzugsweise mittig an der Lagereinheit angeordnet.

Um auftretende Kräfte besser aufnehmen zu können, kann der Mittenflansch im Querschnitt betrachtet gebogen oder linsenförmig aufgeführt sein. Räumlich betrachtet führt beispielsweise ein gebogener Mittenflansch zu einer Tellerform (mit Loch für die Lagereinheit).

Bei einem segmentartig aufgebauten Stator ist es auch möglich, dass ein Statorsegment bereits einen Teil des Mittenflansches aufweist. Auch diese Segmente des Mittenflansches sind an der Lagereinheit verbunden. In Umfangsrichtung betrachtet, müssen dabei die einzelnen Segmente des Mittenflansches zusammengesetzt nicht zwangsläufig eine geschlossenen Fläche bilden. Der Mittenflansch könnte damit auch, in Fortführung des erfinderischen Gedankens speichenförmig ausgeführt sein, um den Felgenhohlraum zu halten und die im Betrieb der Windkraftanlage auftretenden Kräfte aufzunehmen.

Der Mittenflansch wird mittels Schweißen oder Schrauben an dem Felgenboden fixiert. Der Felgenboden ist dabei entweder symmetrisch oder asymmetrisch bzgl. des Mittenflansches ausgeführt. Dies hängt u.a. auch von der axialen Position des Mittenflansches auf der Lagereinheit und/oder der Gestaltung des Kühlluftstromes ab. Der Statorträger und/oder der Felgenboden weist zur Aufnahme der mechanischen Belastungen Verstärkungs- und Versteifungselemente auf, die durch Schweiß- oder Schraubverbindungen u.a. kraftschlüssig miteinander verbunden sind.

Die Erfindung sowie weitere vorteilhafte Ausgestaltungen der Erfindung sind den folgenden Ausführungsbeispielen zu entnehmen. Dabei zeigen:
- FIG 1: einen Längsschnitt eines Turmkopfes mit einem Statorträger,
- FIG 2: einen Längsschnitt eines Turmkopfes mit einem weiteren Statorträger,
- FIG 3: eine Detaildarstellung des Statorträgers nach FIG 1,
- FIG 4: eine Detaildarstellung des Statorträgers nach FIG 2,
- FIG 5: die prinzipielle Darstellung eines Kühlluftstromes innerhalb des Außenläufergenerators,
- FIG 6: eine Detaildarstellung eines Stators im Längsschnitt.

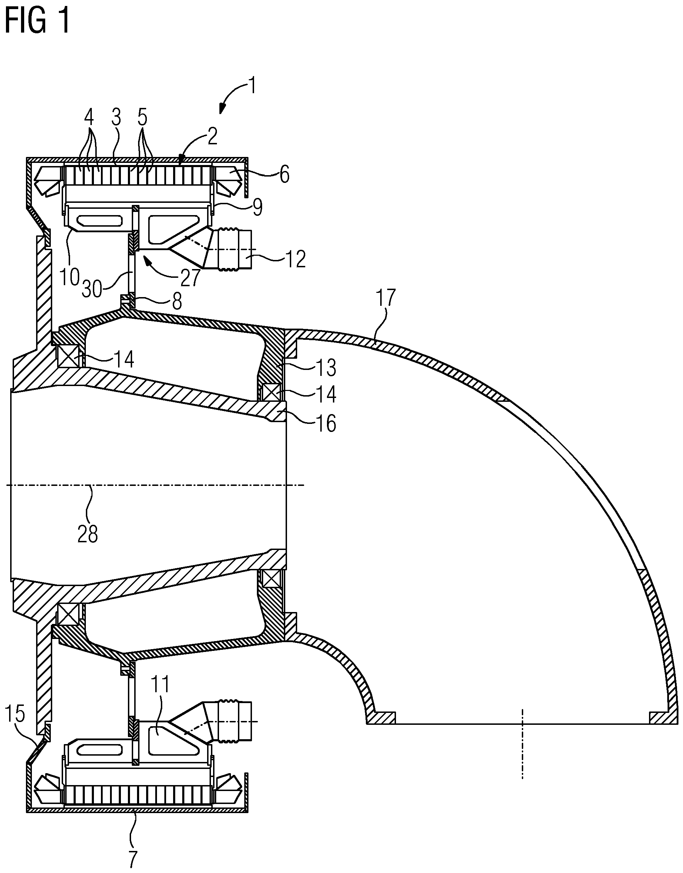

FIG 1 zeigt in einem Teillängsschnitt einer Windkraftanlage einen direkt angetriebenen Windkraftgenerator 1, der einen Rotor 7 aufweist, der als Außenläufer ausgeführt ist, und um eine Achse 28 drehbar gelagert ist. Radial weiter innen - Richtung Achse 28 - ist ein Stator 2 angebracht, der ein Blechpaket 3 aufweist, wobei das Blechpaket 3 aus axial hintereinander angeordneten Teilblechpaketen 4 ausgebildet ist. Diese Teilblechpakete 4 sind axial voneinander beabstandet, so dass sich zwischen ihnen radiale Kühlspalte 5 im Blechpaket 3 ergeben. An den Stirnseiten des Blechpakets 3 des Stators 2 ist jeweils ein Wickelkopf 6 ausgeführt, dessen einzelne Formspulen im Wickelkopfbereich in dieser Ausführung unterschiedliche Neigungswinkel zu der Achse 28 aufweisen, um die axiale Ausdehnung des Stators 2 zu reduzieren.

Der Stator 2 ist entweder aus einteiligen axial geschichteten Blechen oder in Umfangsrichtung betrachtet aus mehreren Statorsegmenten 2 aufgebaut. Jedes Statorsegment weist dabei axial geschichtete Bleche auf. Demnach weist auch jedes Statorsegment 2 axial angeordnete Teilblechpakete 4 auf.

Dabei ist der Stator oder jedes Statorsegment 2 über einen Statorträger 27 mit einer Lagereinheit 13 verbunden. Der Statorträger 27 weist somit Flanschringe 9, einen Felgenboden 10 und einen Mittenflansch 8 auf, der sich wiederum auf der Lagereinheit 13 abstützt. Die Lagereinheit 13 ist über Lager 14 an der Rotornabe 16 gelagert. Die Lagereinheit 13 ist über dementsprechende Verbindungen mit einem Maschinenhausrahmen 17 fest verbunden.

Die Rotornabe 16 ist über dementsprechende Verbindungselemente 15 mit dem Rotor 7 des Generators 1 verbunden. Durch Drehung der Rotornabe 16 und damit der Drehung des Rotors 7 des Windkraftgenerators 1 wird durch elektromagnetische Wechselwirkungen eine Spannung im Wicklungssystem des Windkraftgenerators 1 erzeugt.

Die Flanschringe 9 bilden zusammen mit einem Felgenboden 10 und dem Stator bzw. den Statorsegmenten 2 einen weitgehend abgeschlossenen Hohlraum 11, den Felgenhohlraum, der nur durch die radialen Kühlspalte 5 mit dem Luftspalt 19 des Windkraftgenerators 1 verbunden ist. In dem Hohlraum 11 wird nun über zumindest ein Absaugrohr 12 ein Unterdruck erzeugt, so dass eine Kühlluftströmung über die Wickelköpfe 6, den Luftspalt 19 des Generators 1 und die radialen Kühlspalte 5 im Blechpaket 3 eintritt.

Dadurch werden vor allem die Wickelköpfe 6 des Stators 2, die Permanentmagnete 18 des Rotors 7, das Blechpaket 3 des Stators 2 mit seinem Wicklungssystem gekühlt.

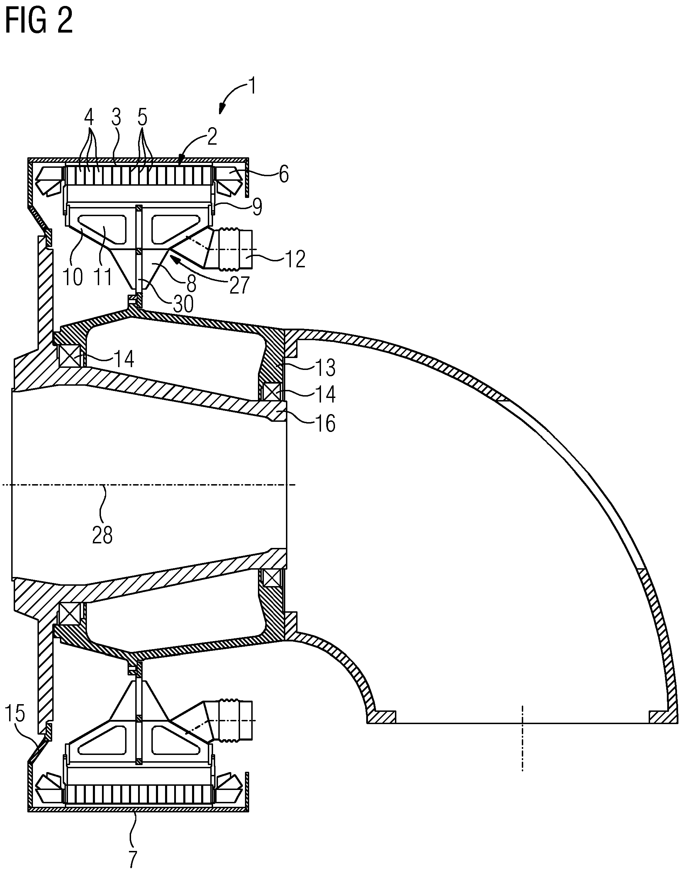

FIG 2 zeigt einen ähnlichen Aufbau wie FIG 1, jedoch ist der Mittenflansch 8 und der Felgenboden 10 konstruktiv etwas anders ausgeführt. Der Felgenboden 10 ist bzgl. des Mittenflansches 8 entgegen FIG 1 nahezu symmetrisch ausgeführt, was zu einer Vergleichmäßigung der mechanischen Belastungen führt. Es wird jedoch auch hier die Kühlluft auf beide Wickelköpfe 6 gleichmäßig verteilt und es findet eine Kühlung wie in FIG 1 beschrieben statt.

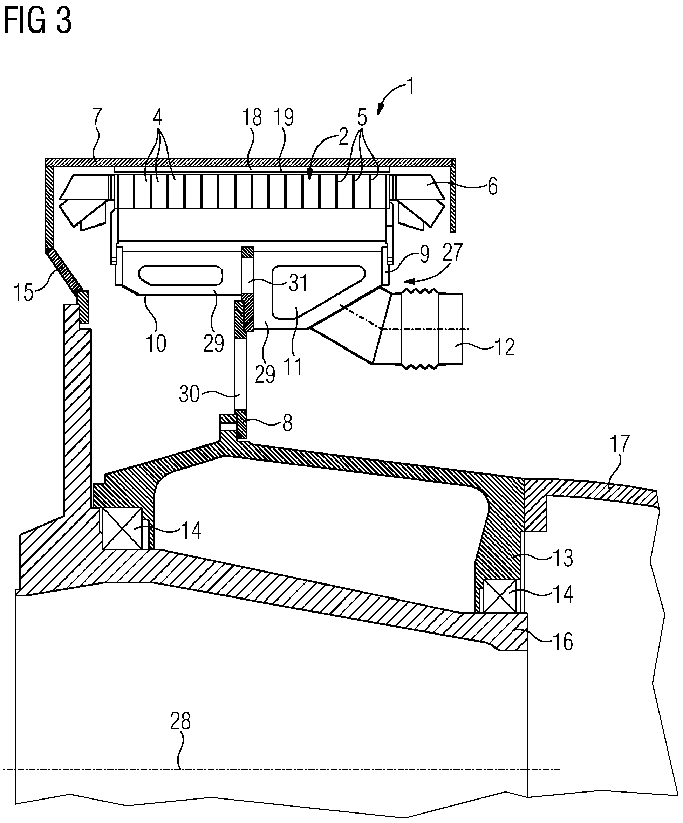

FIG 3 zeigt in Detailansicht die Lagereinheit 13 mit dem Generator 1 gemäß FIG 1, wobei hier der Mittenflansch 8 einen axialen Durchbruch bzw. eine Ausnehmung 30 zeigt, um einem Teil der Zuluft den Zugang zum abgewandten Wickelkopf 6 zu ermöglichen. Der Mittenflansch 8 selbst ist über dementsprechende Verbindungen mit der Lagereinheit 13 verbunden. Ebenso ist eine Verbindung des Mittenflansches 8 mit einem Felgenboden 10 vorgesehen. Der Felgenboden 10 ist hier bzgl. des Mittenflansches 8 asymmetrisch ausgebildet. Dies kann für spezielle mechanische Belastungen vorteilhaft sein, insbesondere wenn der Mittenflansch 8 auf der Lagereinheit 13 nicht mittig angeordnet ist.

Diese Ausgestaltung führt zu einem Hohlraum 11, der unterschiedliche Teilvolumina radial innerhalb des Blechpakets 3 bzw. den Teilblechpaketen 4 des Stators 2 bereitstellt. Dies ist vorteilhaft, vor allem wenn die Zuluftzuführung über die Wickelköpfe 6 ungleichmäßig eingestellt werden soll.

Der Felgenboden 10 weist vorteilhafterweise Verstärkungselemente 29 auf, die den Hohlraum 11 und damit den Stator oder die Statorsegmente 2 zusätzlich versteifen. Die Verstärkungselemente 29 sind dabei zumindest axial und/oder radial am Felgenboden 10 angeordnet. Sie können sich somit innerhalb und/oder außerhalb des Hohlraumes 11 erstrecken.

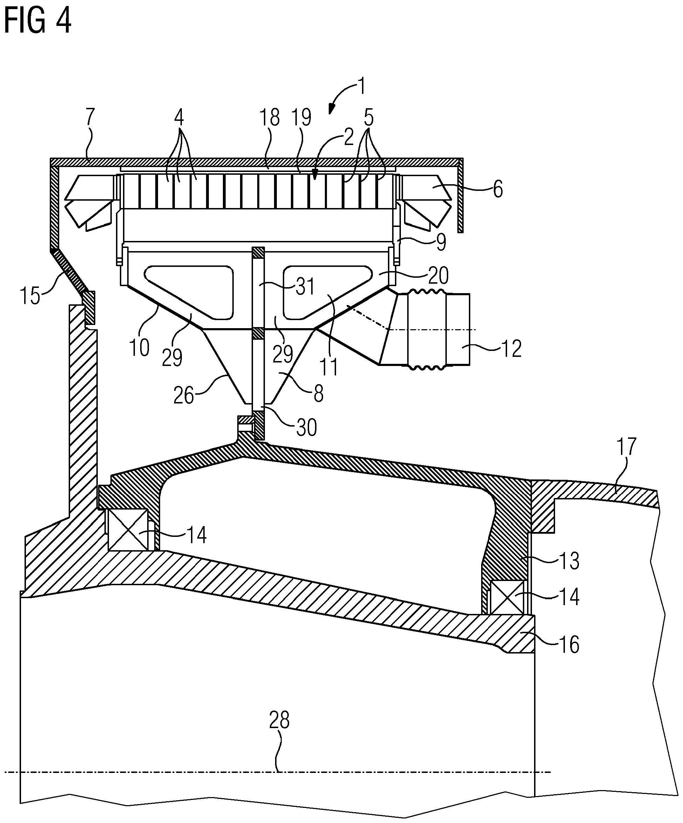

FIG 4 zeigt in näherer Darstellung die Ausführung gemäß FIG 2, wobei auch hier der Mittenflansch 8 mit Verstärkungselementen 26 versehen wurde. Diese Verstärkungselemente 26 sind in dieser Ausführung radial angeordnet. Der Felgenboden 10 rechts und links des Mittenflansches 8 ist nahezu identisch ausgeführt ist, was die Herstellung und Montage vereinfacht.

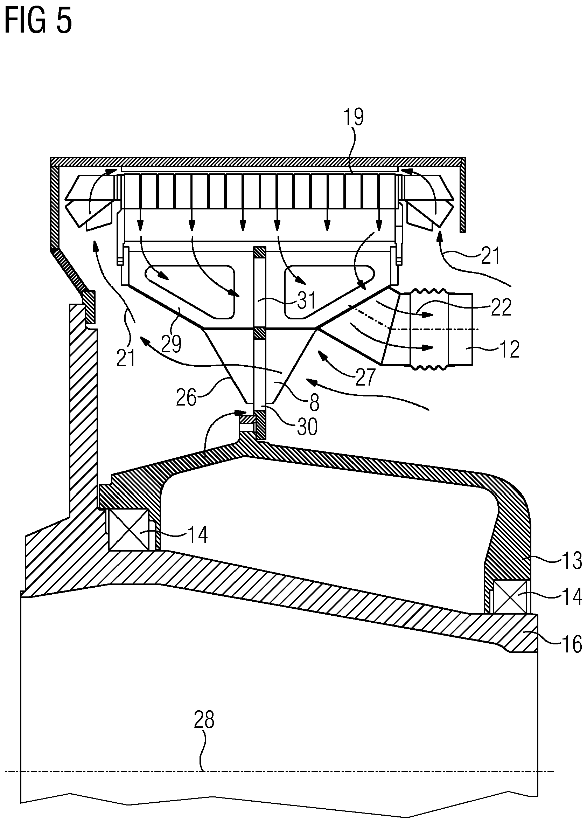

In FIG 5 ist gemäß der Ausführung nach FIG 2 der erzeugte Kühlluftstrom dargestellt, wobei die Zuluft 21, die beispielsweise aus dem Gondelinnenraum kommt, auf die Wickelköpfe 6 in oben beschriebener Art und Weise verteilt wird. Die Verteilung erfolgt zum einen auf den vom Rotorblatt abgewandten Wickelkopf 6 als auch über eine dementsprechende Öffnung des Mittenflansches 8 auf den Wickelkopf 6, der dem Rotorblatt zugewandt ist.

Die Kühlung des Windkraftgenerators nach FIG 1 oder FIG 3 erfolgt auf gleiche Weise.

Aufgrund eines Unterdrucks im Absaugrohr 12 ergibt sich nunmehr der weitere Verlauf des Kühlluftstroms derart, dass ausgehend von den bereits bis zum Wickelkopf 6 strömenden Zuluftströmen 21 diese über den Luftspalt 19 des Generators 1 strömen und dabei bereits über die radialen Kühlspalte 5 im Stator bzw. Statorsegment 2 radial nach innen geführt werden.

Die Kühlluftströme führen in den Hohlraum 11, der sich zwischen den Flanschringen 9, dem Felgenboden 10 und der dem Luftspalt 19 abgewandten Seite des Stators 2 erstreckt. Zwischen Teilvolumina radial innerhalb des Stators 2 sind zum Luftaustausch innerhalb des Hohlraumes 11 vorteilhafterweise Luftaustauschöffnungen 31 vorgesehen, die zu einer Vergleichmäßigung der Kühlluftströme und damit der Kühllistung beitragen. Die erwärmte Kühlluft 22 wird vom Hohlraum 11 abgesaugt und über ein oder mehrere Absaugrohre 12 abgeführt. Die erwärmte Kühlluft 22 wird über Wärmetauscher geführt oder nach außen außerhalb der Gondel geleitet.

Die erwärmte Kühlluft 22 kann auch zu Heizungszwecken innerhalb der Gondel oder im Nabenbereich des Rotorblattes oder innerhalb der Rotorblätter verwendet werden.

Die Lagereinheit 13 kann auch nur ein Momentenlager aufweisen. Ebenso können mehrere Absaugrohre 12 in Umfangsrichtung verteilt angeordnet sein, die dann in axialer Richtung die erwärmte Kühlluft 22 abblasen, was zu einer zusätzlichen Vergleichmäßigung der Kühlleistung beiträgt.

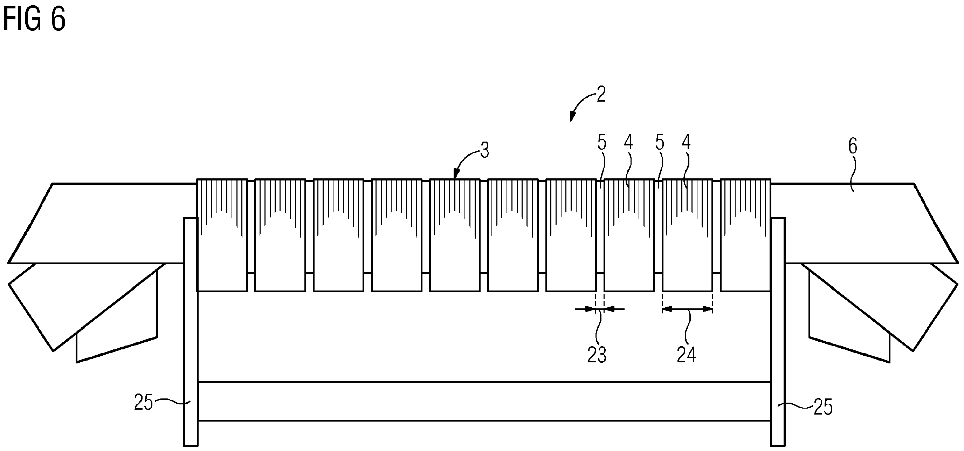

FIG 6 zeigt in einem Längsschnitt ein Statorsegment 2 eines Stators 2 mit einem Blechpaket 3 und den Teilblechpaketen 4. Jedes Statorsegment 2 oder der gesamte Stator - falls dieser in Umfangsrichtung einteilig ausgebildet ist - weist einzelne radiale Kühlspalte 5 aufweisen. Das Blechpaket 3 ist durch Druckplatten 25 axial fixiert. Eine Fixierung des Blechpaketes 3 kann alternativ oder ergänzend auch dadurch erfolgen, dass die ersten und letzten Bleche (Anzahl jeweils 3 bis 10 Bleche) eines Blechpaketes 3 oder Teilblechpaketes 4 mit Backlack miteinander verklebt sind.

Des Weiteren kann durch die Wahl der axialen Breite 24 des Teilblechpakets 4 und/oder durch die axiale Breite 25 der radialen Kühlspalte 5 die Strömungsverhältnisse und damit die Temperaturverteilung innerhalb des Windkraftgenerators 1 beeinflusst werden.

## Patentansprüche

1. Statorträger (27) eines Stators (2) einer direkt angetriebenen Windgenerators (1) mit Außenläufer, welcher Statorträger (27) sich über ein Befestigungselement auf einer Lagereinheit (13) abstützt, **dadurch gekennzeichnet, dass** das Befestigungselement einen mit der Lagereinheit (13) verbindbaren Mittenflansch (8) aufweist, und sich in seinem radialen Verlauf nach außen axial in Richtung der Stirnseiten des Stators (2) erweitert, um radial innerhalb des Stators (2) einen Hohlraum (11) zu schaffen.

2. Statorträger (27) nach Anspruch 1, **dadurch gekennzeichnet , dass** das Befestigungselement neben dem Mittenflansch (8) einen Felgenboden (10) aufweist, der sich über Flanschringe (9) an die Stirnseiten des Stators (2) erstreckt.

3. Stator (2) mit einem Statorträger (27) nach Anspruch 1 oder 2, **dadurch gekennzeichnet, dass** ein Blechpaket (3) des Stators (2) axial voneinander beabstandete Teilblechpakete (4) aufweist.

4. Stator (2) nach Anspruch 3, **dadurch gekennzeichnet, dass** der Stator (2) in Umfangsrichtung betrachtet aus segmentartig angeordneten Statorsegmenten (2) aufgebaut ist.

5. Stator (2) nach einem der vorhergehenden Ansprüche 3 und 4, **dadurch gekennzeichnet, dass** auf einer Seite des Stator (2) Zu- und Abluftöffnungen einer Kühlung vorgesehen sind.

6. Stator (2) nach einem der vorhergehenden Ansprüche 3 bis 5, **dadurch gekennzeichnet, dass** die Abluftöffnungen mit dem Hohlraum (11) strömungstechnisch in Verbindung stehen.

7. Windkraftgenerator (1) mit einem Stator (2) nach einem der vorhergehenden Ansprüche 3 bis 6.

8. Lagereinheit (13) zur Fixierung eines Stators (2) nach einem oder mehrerer der vorhergehenden Ansprüche 3 bis 6, die sich zumindest über ein Lager (14) auf einer Rotornabe (16) abstützt und mit einem Maschinenhausrahmen (17) einer Windkraftanlage verbunden ist, wobei die Lagereinheit (13) einen Mittenflansch (8) aufweist, der sich in radialer Richtung erstreckt.

9. Windkraftanlage mit einer Lagereinheit (13) nach Anspruch 7, **dadurch gekennzeichnet , dass** die Zu- und Abluftseite des Windkraftgenerators (1) auf der einem Rotorblatt abgewandten Seite vorgesehen ist.

10. Kühlverfahren eines Windkraftgenerators (1) nach Anspruch 7, wobei über zumindest eine Zuluftöffnung, Luft den beiden Wickelköpfen (6) auf der Stirnseite des Stators (2) zugeführt und über den Luftspalt (19) des Windkraftgenerators (1), den Kühlschlitzen (5) zwischen den Teilblechpaketen (4) des Stators (2) und dem Hohlraum (11) radial innerhalb des Stators (2) über zumindest eine Abluftöffnung (12) abgesaugt wird.
